# EUROPÄISCHE PATENTSCHRIFT

(11) **EP 2 465 985 B1**
(45) Veröffentlichungstag und Bekanntmachung des Hinweises auf die Patenterteilung: **11.03.2015**
(21) Anmeldenummer: 10195598.7
(22) Anmeldetag: 17.12.2010
(51) Int. Cl.: D04H 1/42, B32B 37/00

(54) **Verfahren zur Herstellung eines elastischen Verbundstoffes mit textiler Oberfläche**
Method for producing an elastic compound material with textile surface
Procédé de fabrication d'une matière composite élastique dotée d'une surface textile

(43) Veröffentlichungstag der Anmeldung: 20.06.2012
(73) Patentinhaber: Mondi Consumer Packaging Technologies GmbH, 48599 Gronau (DE)
(72) Erfinder: Homölle, Dieter, 48607 Ochtrup (DE); Schönbeck, Marcus, 33775 Versmold (DE)
(74) Vertreter: Albrecht, Rainer Harald

(56) Entgegenhaltungen:
- GB-A- 2 066 732
- US-A- 5 066 348

## Beschreibung

Die Erfindung betrifft ein Verfahren zur Herstellung eines elastischen Verbundstoffes mit textiler Oberfläche.

Elastische Verbundstoffe mit textiler Oberfläche werden u. a. zur Herstellung von Babywindeln, z. B. als Tapes oder elastisches Backsheet, Inkontinenzartikeln, Damenhygieneprodukten und dergleichen verwendet. Bei diesen Anwendungen kommt der textilen Oberfläche, die kostengünstig gefertigt werden muss, große Bedeutung zu. Dabei darf die textile Oberfläche die Elastizität der Folie nicht beeinträchtigen.

Bekannt sind Verbundstoffe aus einer elastischen Trägerfolie und einem aufkaschierten Vliesstoff. Dieser bildet ein festes Gefüge, welches das Dehnungsverhalten des Verbundstoffes maßgebend beeinflusst. Verbundstoffe aus einer elastischen Trägerfolie und einem aufkaschierten Vliesstoff müssen daher nach dem Kaschiervorgang durch lokale Verstreckung mechanisch aktiviert werden.

Aus EP 2 177 654 A1 ist ein Verfahren zur Herstellung eines elastischen Verbundstoffes mit textiler Oberfläche bekannt, bei dem eine Schicht aus Meltblown-Nonwoven erzeugt und ohne vorherige Verfestigung auf eine elastische Folie aufgeklebt wird. Die Nonwovenschicht wird bei diesem Verfahren nicht auf- und abgerollt und es ist keine Führung der Nonwovenschicht unter Zugspannung vorgesehen. Die Nonwovenschicht kann daher mit einer geringen Festigkeit und insbesondere mit einem geringen Flächengewicht gebildet werden und behindert die elastische Dehnung des Verbundstoffes nicht stark. Der Verbundstoff bedarf daher keiner nachträglichen mechanischen Aktivierung. Allerdings ist die Verbundfestigkeit zwischen den Fasern der textilen Schicht und der elastischen Folie noch nicht zufriedenstellend. Da weitgehend mit losen Fasern gearbeitet wird, ist nicht sichergestellt, dass alle Fasern hinreichend in der Klebstoffmatrix verankert werden. Es können sich Fasern aus dem Verbund unbeabsichtigt lösen und vom Benutzer aufgenommen werden.

Aus der GB 2 066 732 A ist ein Laminat aus einer Folie und einer dünnen Papierschicht bekannt, welches beispielsweise als Transparentpapier eingesetzt werden kann. Zur Herstellung des Laminates wird eine Papierschicht zwischen zwei Folien eingebracht, wobei dann innerhalb der Papierschicht unter Ausbildung zweier Laminatbahnen eine Schichttrennung erfolgt.

Aus der US 5 066 348 ist ein Verfahren zur Herstellung eines Laminates mit einer weichen Oberfläche bekannt, wobei eine Bahn aus Zellulosefasern zwischen zwei Folien eingebracht wird, wobei dann durch eine Schichttrennung innerhalb der Bahn der Zellulosefasern zwei Laminate aus jeweils einer Folie und einer dünnen Deckschicht aus Zellulosefasern gebildet werden. Die Laminate können für Wegwerf-Hygiene-Produkte eingesetzt werden.

Vor diesem technologischen Hintergrund liegt der Erfindung die Aufgabe zugrunde, ein Verfahren zur Herstellung eines Verbundstoffes mit textiler Oberfläche anzugeben, das sich durch ein hohes Dehnungsvermögen auszeichnet, und dessen textile Oberfläche keine losen Fasern enthält, die sich beim Gebrauch des Verbundstoffes aus dem Verbund lösen.

Gegenstand der Erfindung und Lösung dieser Aufgabe ist ein Verfahren nach Anspruch 1. Bei dem erfindungsgemäßen Verfahren wird zunächst ein Laminat hergestellt, welches elastische Deckschichten und einen Kern aus einem Vliesstoff aufweist. Das Laminat wird anschließend durch Aufreißen des Kerns in zwei Streifen getrennt, die jeweils eine Deckschicht und eine anhaftende Schicht aus Vliesstoff aufweisen. Das Verfahren hat den Vorteil, dass die Fasern der textilen Oberfläche im Vliesstoff gebunden sind und dass beim Aufreißen des aus einem Vliesstoff bestehenden Kerns keine freien Fasern entstehen, die leicht von dem Verbund lösbar sind. Es kann ein Vliesstoff eingesetzt werden, der schwach verfestigt ist. Der Grad der Verfestigung kann z. B. bei der Anwendung einer Kalanderverfestigung so eingestellt werden, dass der Verbundstoff ohne nachträgliche mechanische Aktivierung elastisch dehnbar ist, und dass die Dehnungseigenschaften durch die Elastizität der Deckschicht geprägt werden.

Zum Auftrennen des Laminats werden die Streifen vorzugsweise separat erfasst und durch Aufbringen von Zugkräften auseinandergezogen. Die Streifen können über angetriebene Walzen geführt und separat aufgewickelt werden. Im Rahmen der Erfindung liegt es, dass der Auftrennvorgang mit einer mechanischen Aktivierung der elastischen Deckschicht der Streifen verbunden wird, und zwar durch eine Dehnung der elastischen Deckschichten beim Abziehen. Beim Abziehen und Aufwickeln der Streifen können die Streifen durch mit geeigneten Einrichtungen in Querrichtung und/oder Längsrichtung gestreckt werden. Insbesondere können die Streifen auch über Profilwalzen geführt werden, in denen eine Überstreckung des Streifens quer zur Abzugsrichtung erfolgt. Hierdurch können die Dehnungseigenschaften des Verbundstoffes beeinflusst und weiter verbessert werden.

Das Aufreißen des Vliesstoffes kann durch ein in der Trennebene angeordnetes Messer unterstützt werden.

Das Laminat mit elastischen Deckschichten und einem Kern aus Vliesstoff ist auf verschiedene Weise herstellbar. Vorzugsweise wird der Vliesstoff zwischen zwei elastische Folienbahnen einkaschiert. In Betracht kommt aber grundsätzlich auch eine Extrusionskaschierung, bei der die elastischen Schichten durch Extrusion auf den Vliesstoff aufgebracht werden.

Die elastischen Deckschichten weisen vorzugsweise eine Schichtdicke zwischen 20 µm und 100 µm auf und können aus einem Styrol-Block-Copolymer oder einem thermoplastischen Polyolefin-Elastomer bestehen. Neben Monofolien können auch mehrschichtig coextrudierte Folien für die Deckschichten eingesetzt werden. Insbesondere kommen auch perforierte bzw. atmungsaktive elastische Folien für die Deckschichten in Betracht. Bei Verwendung einer atmungsaktiven elastischen Folie bleibt im Verbundstoff diese wichtige Eigenschaft erhalten. Anstelle einer elastischen Folie kann grundsätzlich auch ein elastischer Vliesstoff, der ausreichend zugfest ist, zum Einsatz kommen.

Der Vliesstoff und die elastischen Folienbahnen bzw. elastischen Deckschichten werden vorzugsweise miteinander verklebt, wobei insbesondere Polyurethanklebstoff und Hotmeltklebstoffe geeignet sind. Der Klebstoff kann flächig oder in Mustern, z. B. punktförmig appliziert werden. Bevorzugt ist ein flächiger Klebstoffauftrag, wobei bei Verwendung eines lösungsmittelfreien einkomponentigen Polyurethanklebstoffes (1-K-PUR) ein Klebstoffauftrag mit einer Auftragsmenge zwischen 1 g/m² und 2,5 g/m² ausreichend ist. Bei Verwendung eines Hotmeltklebstoffes wird im Allgemeinen ein höheres Auftragsgewicht von 3 g/m² bis 5 g/m² notwendig sein.

Der Vliesstoff, der den Kern des Laminats bildet und im Zuge des Herstellungsverfahrens aufgerissen wird, besteht vorzugsweise aus einem Meltblown-Nonwoven. Die Fasern eines Meltblown-Nonwovens werden durch Extrusion hergestellt und treten üblicherweise aus mehreren nebeneinander angeordneten Löchern einer Extrusionsdüse aus. Unmittelbar nach dem Verlassen der Extrusionsdüse werden die schmelzflüssigen, aus den Löchern austretenden Polymerstränge mit Druckluft beaufschlagt und gestreckt. Meltblown-Fasern zeichnen sich dadurch aus, dass sie sehr dünn sind und bereits bei einem geringen Flächengewicht eine gute homogene Bedeckung der elastischen Deckschichten gewährleisten und sich durch ein besonders weiches Erscheinungsbild auszeichnen. Das Nonwoven besteht vorzugsweise aus polyolefinischen Fasern, insbesondere Polypropylenfasern. Das Meltblown-Nonwoven wird für das erfindungsgemäße Verfahren lediglich leicht verfestigt und kann mit einem Flächengewicht von 5 g/m² bis 20 g/m² eingesetzt werden. Der Grad der Verfestigung, z. B. durch eine Kalanderverfestigung, richtet sich nach den gewünschten Dehnungseigenschaften des Verbundstoffes.

Als Vliesstoff kann auch ein mehrschichtiger Vliesstoff mit einem SMS-Schichtenaufbau (spun-melt-spun) verwendet werden, der äußere Schichten aus einem Spinnvlies (S) und eine mittlere Nonwovenschicht aus Meltblown-Fasern (M) aufweist. Die Kombination von Schichten aus einem Spinnvlies und einem Meltblown-Nonwoven verleiht dem Vliesstoff eine höhere Festigkeit in Maschinenrichtung (MD-Richtung). Beim Aufreißen des vorgefertigten Laminats kommt es zu einer Trennung des Vliesstoffes innerhalb der Kernschicht, die aus einem Meltblown-Nonwoven besteht. Es wurde festgestellt, dass die Materialdicke und das Flächengewicht der durch Aufreißen des Laminats getrennten Streifen innerhalb enger Toleranzen konstant bleibt, wenn die Trennebene durch eine Kernschicht aus einem Meltblown-Nonwoven verläuft. Es resultieren Verbundstoffstreifen mit hoher Qualität, insbesondere mit einer sehr hochwertigen textilen Oberfläche.

Andere Vliesstoffe sind für das erfindungsgemäße Verfahren ebenfalls brauchbar. Allerdings ist die Qualität der textilen Oberfläche schlechter, wenn z. B. ein kardiertes Nonwoven als Kernschicht des Laminats verwendet wird.

Ein nach dem erfindungsgemäßen Verfahren hergestellter Verbundstoff eignet sich für Hygieneartikel, z. B. für Abschnitte oder Verschlusselemente an Babywindeln und Inkontinenzartikeln. Ferner können nach dem erfindungsgemäßen Verfahren auch sogenannte Soft-Touch-Folien für Anwendungen außerhalb des Hygienebereiches hergestellt werden.

Im Folgenden wird die Erfindung anhand einer lediglich ein Ausführungsbeispiel darstellenden Zeichnung erläutert. Es zeigen schematisch:
- Fig. 1: ein Verfahren zur Herstellung eines elastischen Verbundstoffes mit textiler Oberfläche,
- Fig. 2: einen Schnitt durch ein Laminat, welches bei dem in Fig. 1 dargestellten Verfahren als Vorprodukt hergestellt wird,
- Fig. 3: die Auftrennung des in Fig. 2 dargestellten Vorprodukts in einer gegenüber Fig. 1 vergrößerten Darstellung.

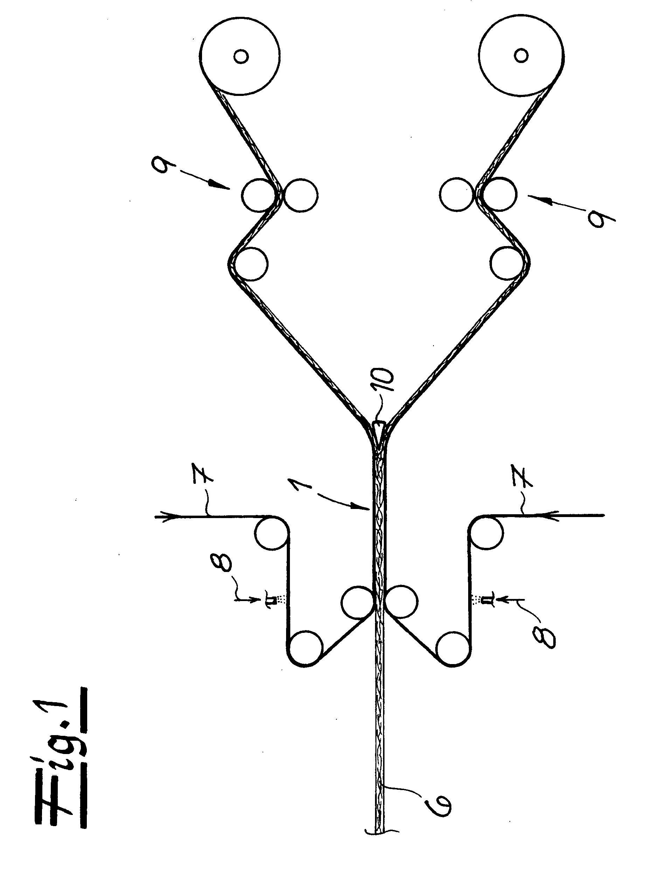

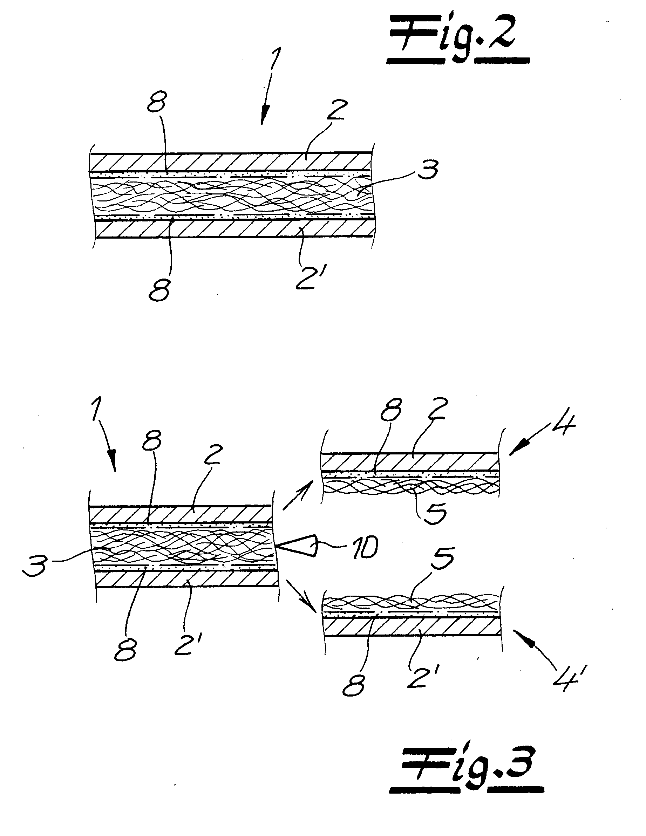

Das in Fig. 1 dargestellte Verfahren dient zur Herstellung eines elastischen Verbundstoffes mit textiler Oberfläche, der z. B. als Soft-Touch-Folie oder als elastisches Element an Babywindeln, Inkontinenzartikeln und dergleichen verwendet werden kann. Bei dem Verfahren wird in einem ersten Schritt als Vorprodukt ein Laminat 1 hergestellt, welches elastische Deckschichten 2, 2' und einen Kern 3 aus einem Vliesstoff aufweist. Die Fig. 2 zeigt den Schichtenaufbau des Vorprodukts. Anschließend wird das Laminat 1 durch Aufreißen des Kerns 3 in zwei Streifen 4, 4' getrennt, die jeweils eine Deckschicht 2, 2' und eine anhaftende Schicht aus Vliesstoff 5 aufweisen. Die Streifen 4, 4' bilden jeweils ein Verfahrenserzeugnis, welches ohne nachträgliche mechanische Aktivierung als elastischer Verbundstoff verwendet werden kann.

Der Kern 3 besteht aus einem Meltblown-Nonwoven oder weist einen mehrschichtigen Aufbau mit äußeren Schichten aus einem Spinnvlies und einer mittleren Nonwovenschicht aus Meltblown-Fasern auf. Eine den Kern 3 bildende Vliesstoffbahn 6 wird zwischen zwei elastischen Folienbahnen 7 einkaschiert und mit den Folienbahnen 7 verklebt. Der Klebstoff 8 wird vorzugsweise flächig auf die zum Vliesstoff benachbarte Fläche der Folienbahn 7 appliziert. Als Klebstoff 8 können Polyurethanklebstoffe oder Hotmeltklebstoffe verwendet werden.

Das Laminat 1 wird durch Aufreißen des Kerns 3 in zwei Streifen 4, 4' getrennt. Die Streifen 4, 4' werden separat erfasst und durch Aufbringen von Zugkräften auseinandergezogen. Gemäß der Darstellung in Fig. 1 werden die Streifen 4, 4' über angetriebene Walzen einer Abzugseinrichtung 9 geführt und separat aufgewickelt. Optional kann die Abzugseinrichtung 9 mit einer Reckeinrichtung kombiniert werden, in der die Streifen 4, 4' in Querrichtung gedehnt und damit mechanisch aktiviert werden.

Das Aufreißen des Kerns 3 kann durch ein in der Trennebene angeordnetes Messer 10 unterstützt werden.

Bei einer vergleichenden Betrachtung der Fig. 2 und 3 ist ersichtlich, dass nach dem erfindungsgemäßen Verfahren elastische Verbundstoffe, nämlich die Streifen 4, 4' gefertigt werden, die einen elastischen Träger, sowie eine textile Oberfläche aufweisen. Der elastische Träger wird gebildet von einer Deckschicht 2, 2' des Laminats 1 und verleiht dem Verbundstoff seine mechanischen Eigenschaften. Die Textilstruktur ist abhängig von dem verwendeten Vliesstoff im Kern 3 des Laminats 1. Bevorzugt erfolgt die Trennung durch eine Nonwovenschicht aus einem Meltblown-Nonwoven, dessen Fasern dünn sind und bei der Auftrennung eine hochwertige textile Oberfläche bilden. Zur Herstellung des ein Vorprodukt bildenden Laminats 1 wird ein leicht verfestigtes Nonwoven verarbeitet. Durch das Auftrennen der Nonwovenschicht in dem nachfolgenden Schritt entstehen keine freien Fasern, die sich beim Gebrauch des Verbundstoffes lösen können. Beim Auftrennen des Vliesstoffkerns 3 werden Streifen 4, 4' gebildet, die hinsichtlich der Materialdicke und ihres Flächengewichtes innerhalb enger Toleranzgrenzen konstante Werte aufweisen.

## Patentansprüche

1. Verfahren zur Herstellung eines elastischen Verbundstoffes mit textiler Oberfläche,
wobei ein Laminat (1) hergestellt wird, welches elastische Deckschichten (2, 2') und einen Kern (3) aus einem Vliesstoff aufweist, und
wobei das Laminat (1) anschließend durch Aufreißen des Kerns (3) in zwei Streifen (4, 4') getrennt wird, die jeweils eine Deckschicht (2, 2') und eine anhaftende Schicht (5) aus Vliesstoff aufweisen.

2. Verfahren nach Anspruch 1, **dadurch gekennzeichnet, dass** die Streifen (4, 4') separat erfasst und durch Aufbringen von Zugkräften auseinandergezogen werden.

3. Verfahren nach Anspruch 1 oder 2, **dadurch gekennzeichnet, dass** die Streifen (4, 4') über angetriebene Walzen geführt und separat aufgewickelt werden.

4. Verfahren nach einem der Ansprüche 1 bis 3, **dadurch gekennzeichnet, dass** das Aufreißen des Kerns (3) durch ein in der Trennebene angeordnetes Messer (10) unterstützt wird.

5. Verfahren nach einem der Ansprüche 1 bis 4, **dadurch gekennzeichnet, dass** eine den Kern (3) bildende Vliesstoffbahn (6) Vliesstoff zwischen zwei elastischen Folienbahnen (7) einkaschiert wird.

6. Verfahren nach Anspruch 5, **dadurch gekennzeichnet, dass** die Vliesstoffbahn (6) und die elastischen Folienbahnen (7) verklebt werden.

7. Verfahren nach einem der Ansprüche 1 bis 6, **dadurch gekennzeichnet, dass** der Kern (3) des Laminats (1) aus einem Meltblown-Nonwoven besteht.

8. Verfahren nach einem der Ansprüche 1 bis 6, **dadurch gekennzeichnet, dass** für den Kern (3) des Laminats (1) ein mehrschichtiger Vliesstoff mit einem SMS-Schichtenaufbau verwendet wird, der äußere Schichten aus Spinnvlies (S) und eine mittlere Nonwovenschicht aus Meltblown-Fasern (M) aufweist.

## Claims

1. A method for manufacturing an elastic composite material with a textile surface,
wherein a laminate (1) is manufactured which comprises elastic top layers (2, 2') and a core (3) from a nonwoven, and
wherein, by subsequently tearing the core (3) open, the laminate (1) is separated into two strips (4, 4') which each comprise a top layer (2, 2') and an adhering layer (5) from a nonwoven.

2. The method according to claim 1, **characterised in that** the strips (4, 4') are grasped separately and pulled apart by applying tractive forces.

3. The method according to claim 1 or 2, **characterised in that** the strips (4, 4') are guided over driven rollers and wound up separately.

4. The method according to one of claims 1 to 3, **characterised in that** the tearing open of the core (3) is supported by a knife (10) arranged in the separating plane.

5. The method according to one of claims 1 to 4, **characterised in that** a nonwoven web (6) forming the core (3) is laminated in between two elastic film webs (7).

6. The method according to claim 5, **characterised in that** the nonwoven web (6) and the elastic film webs (7) are glued together.

7. The method according to one of claims 1 to 6, **characterised in that** the core (3) of the laminate (1) consists of a meltblown nonwoven.

8. The method according to one of claims 1 to 6, **characterised in that** the core (3) of the laminate (1) is constructed from a multi-layer nonwoven with SMS-layer-build-up which comprises outer layers of a spunbond (S) and a central nonwoven layer of meltblown fibres (M).

## Revendications

1. Procédé destiné à la production d'une matière composite élastique à surface textile
lors duquel on produit un stratifié (1) qui comporte des couches de couverture (2, 2') élastiques et un coeur (3) en un non-tissé et
lors duquel on sépare ensuite le stratifié (1) en déchirant le coeur (3) en deux bandes (4, 4') qui comportent chacune une couche de couverture (2, 2') et une couche (5) adhérente en non-tissé.

2. Procédé selon la revendication 1, **caractérisé en ce qu'**on saisit séparément les bandes (4, 4') et on les tire en sens opposé par application de forces de traction.

3. Procédé selon la revendication 1 ou la revendication 2, **caractérisé en ce qu'**on guide les bandes (4, 4') par l'intermédiaire de cylindres entraînés et on les enroule séparément.

4. Procédé selon l'une quelconque des revendications 1 à 3, **caractérisé en ce que** la déchirure du coeur(3) est assistée par une lame (10) placée dans le plan de séparation.

5. Procédé selon l'une quelconque des revendications 1 à 4, **caractérisé en ce qu'**on contrecolle un lé (6) de non-tissé formant le coeur (3) entre deux lés (7) de film élastiques.

6. Procédé selon la revendication 5, **caractérisé en ce qu'**on colle ensemble le lé (6) de non-tissé et les lés (7) de film élastiques.

7. Procédé selon l'une quelconque des revendications 1 à 6, caractérisé ce que le coeur (3) du stratifié (1) est constitué d'un non-tissé obtenu par extrusion-soufflage.

8. Procédé selon l'une quelconque des revendications 1 à 6, **caractérisé en ce que** pour le coeur (3) du stratifié (1), on utilise un non-tissé multicouches avec une structure de couches SMS qui comporte des couches extérieures en filé-lié (S) et une couche centrale en non-tissé de fibres (M) obtenues par extrusion-soufflage.
